# EUROPEAN PATENT APPLICATION

(11) **EP 3 866 030 A1**
(43) Date of publication of application: **18.08.2021**
(21) Application number: 18936943.2
(22) Date of filing: 06.12.2018
(51) Int. Cl.: G06F 16/957, G06F 9/445

(54) **WEBPAGE LOADING METHOD, INTERMEDIATE SERVER, AND WEBPAGE LOADING SYSTEM**

(30) Priority: 18.10.2018 CN 201811214794
(71) Applicant: Wangsu Science & Technology Co., Ltd., Shanghai 201800 (CN)
(72) Inventor: CHEN, Long, Shanghai 201800 (CN)
(74) Representative: De Arpe Tejero, Manuel
(86) International application number: PCT/CN2018/119595
(87) International publication number: WO 2020/077764

(57) **Abstract**

Embodiments of the present disclosure relate to the field of Internet and provides a page loading method, intermediate server and page loading system. The page loading method of the present disclosure is applied in the intermediate server. The method includes: when a load request for a page is received from a user terminal, obtaining a load list corresponding to the page based on the load request, where the load list includes a plurality of asynchronous load items; adding a scheduling script in the load list, where the scheduling script is configured for: after the page has completed loading, executing the plurality of asynchronous load items; when one asynchronous load item of the plurality of asynchronous load items includes a document write-in function, rewriting a function name of the document write-in function, and writing parameter values of the document write-in function into a preset cache; and after the one asynchronous load item has completed executing, reading out data in the cache, and simulating native behavior of the document write-in function; and feeding back the load list with the added scheduling script to the user terminal for the user terminal to request each load item in the load list to perform a page loading, improving a webpage loading speed.

## Description

### FIELD OF THE TECHNOLOGY

This application relates to the field of Internet and, more particularly, to page loading technologies.

### BACKGROUND

There are many resources in a page, such as HTML (Hypertext Markup Language), JS (JavaScript), CSS (Cascading Style Sheet), IMAGE, and so on. A script is an extension of a batch file and a program stored in plain text format. In general, a computer script program is a combination of a series of actions controlling a computer to perform arithmetic operations, which may execute a certain logical branch. There are multiple elements in the page, such as HTML, JS (JavaScript), CSS (Cascading Style Sheet), IMAGE, and so on.

For a working mode of JS in a browser, by default, when the browser encounters a script, the browser needs to stop and wait for the script to complete execution, and then finish drawing the page. That is, files are loaded and executed one by one. If the time used for loading or executing JavaScript is too long, subsequent vast resource requests can be blocked, thereby causing the time for loading pages to become longer. This will affect the execution time of the browser. When page architecture is unreasonable and JS script is in a front position, problems, such as slow first screen loading, non-showing IMAGE, long-time white screen displaying, and poor user experience may occur.

### SUMMARY

Embodiments of the present disclosure are intended to provide a page loading method, an intermediate server, and a page loading system to improve a webpage loading speed.

To solve the above technical problems, the embodiments of the present disclosure provide a page loading method, applied in an intermediate server. The page loading method includes: when a load request for a page is received from a user terminal, obtaining a load list corresponding to the page based on the load request, where the load list includes a plurality of asynchronous load items; adding a scheduling script in the load list, where the scheduling script is configured for: after the page has completed loading, executing the plurality of asynchronous load items; when one asynchronous load item of the plurality of asynchronous load items includes a document write-in function, rewriting a function name of the document write-in function, and writing parameter values of the document write-in function into a preset cache; and after the one asynchronous load item has completed executing, reading out data in the cache, and simulating native behavior of the document write-in function; and feeding back the load list with the added scheduling script to the user terminal for the user terminal to request each load item in the load list to perform a page loading.

The embodiments of the present disclosure further provide an intermediate server, including: at least one processor; and a memory in communication connection with the at least one processor, where the memory stores instructions executable by the at least one processor, and when the instructions are executed by the at least one processor, the at least one processor implements the above described page loading method.

The embodiments of the present disclosure further provide a page loading system, including: a user terminal and the above described intermediate server.

The embodiments of the present disclosure further provide a computer-readable storage medium, storing a computer program, when the computer program is executed by one or more processors, configured to implement the above described page loading method.

As compared with the existing technology, in the embodiments of the present disclosure, by rewriting the function name of the document write-in function, a page redrawn problem formed by calling a document flow open function caused by simultaneously executing the document write-in function while the asynchronous load item is executed after the page has completed loading is avoided. In addition, the parameter values of the document write-in function are written into the preset cache. After the asynchronous load item has completed executing, the native behavior of the document write-in function is simulated to ensure that the original document write-in function is executed accurately, which does not affect page displaying effects, and has strong compatibility. As shown, in the embodiments of the present disclosure, the page loading method, the intermediate server, and the page loading system may improve the page loading speed and avoid re-occurring the white screen after the page has completed loading, having good compatibility. In addition, the embodiment of the present disclosure innovatively improves established website optimization modes, which do not need to change configuration of the user terminal and codes of an origin station, as well as a website framework of the origin station of a page-to-be-accessed, implementing easily. Technological development time of a website owner is reduced, and a better online experience is provided for the terminal user, which is convenient to popularize the embodiment method of the disclosure.

Further, reading out the data in the cache includes: parsing the data in the cache; adding an item-to-be-loaded to a head of a queue-to-be-executed when the item-to-be-loaded is parsed, where the queue-to-be-executed is a queue where the plurality of asynchronous load items exist, which protects the case of load items nested in a document write-in function, and it is more consistent with actual application scene.

Further, before parsing the data in the cache includes constructing a document tree by using the data in the cache. Specifically, parsing the data in the cache is parsing the document tree. Before parsing the data, the document tree is constructed first and then parsed, thereby increasing a parsing speed.

Further, simulating the native behavior of the document write-in function includes writing a text field in the data in the cache into a position corresponding to a position where the one asynchronous load item is located in the load list.

Further, writing the text field in the data in the cache into a position corresponding to a position where the one asynchronous load item is located in the load list includes: if the asynchronous load item is located in a head position of the load list, the text field in the data stored in the cache is written into a first row in a body part of the load list; if the asynchronous load item is not located in the head position of the load list, the text field in the data stored in the cache is written into the position where the asynchronous load item is located. The native behavior content is simulated in detail, ensuring that the document write-in function is executed accurately.

Further, rewriting the function name of the document write-in function includes rewriting the function name of the document write-in function by using a preset character string. The replacement by using the character string is simple and has good compatibility.

Further, the document write-in function is a document.write function or a document.writeln function. The two write-in functions are determined, which are more consistent with actual application scene.

Further, the scheduling script is configured for registering and triggering a predeterminable event to simulate the page loading process by rewriting a document state of the load list. In the embodiments of the present disclosure, the method for simulating the page loading process is clearly illustrated.

Further, before adding the scheduling script in the load list further includes determining whether an optimization service is used. If the determination is yes, the steps for adding the scheduling script in the load list are performed. In the embodiments of the present disclosure, the steps for adding a scheduling script in the load list are performed only when the determination is yes, making the embodiments of the present disclosure more consistent with the actual situation.

Further, whether the optimization service is used is determined based on a request address in the load request for the page.

### BRIEF DESCRIPTION OF THE DRAWINGS

One or more embodiments are exemplarily described with reference to corresponding figures in accompanying drawings, and these exemplary descriptions do not constitute a limitation to the embodiments. Elements with the same reference numerals in the accompanying drawings represent similar elements. The figures in the accompanying drawings do not constitute a proportion limitation unless otherwise stated.
FIG. 1 illustrates a flowchart of a page loading method according to a first embodiment of the present disclosure;
FIG. 2 illustrates an overall operation flowchart of a page loading system according to a first embodiment of the present disclosure;
FIG. 3 illustrates an execution flowchart of a scheduling script according to a second embodiment of the present disclosure;
FIG. 4 illustrates a flowchart of a rendering process of a browser according to a third embodiment of the present disclosure;
FIG. 5 illustrates an execution flowchart of a scheduling script according to a third embodiment of the present disclosure; and
FIG. 6 illustrates a schematic structure diagram of an intermediate server according to a fifth embodiment of the present disclosure.

### DESCRIPTION OF EMBODIMENTS

In order to make the objects, technical solutions and advantages of the present disclosure clearer, some of embodiments of the present disclosure will be further described in detail hereinafter with reference to the drawings. However, it should be understood by person skilled in the art that in some embodiments of this patent application, plenty of technical details are described to make this application easier to be understood. However, the technical solutions sought to be protected by the claims of this patent application may be implemented even without the technical details and the changes and modification made based on some of embodiments below.

A first embodiment of the present disclosure relates to a page loading method.

The embodiment is applied to an intermediate server. The intermediate server may be some servers for transmitting data in a network. The intermediate server receives a request from a client, and then transmits the request to a backend (i.e., an origin station server) to obtain a backend response. After receiving the response from the backend, the intermediate server sends the response content to a frontend (i.e., client) in a suitable form. For example, a CDN (content delivery network) node is a very typical intermediate server. Data needed for the response is all generated from the backend, but the data may be cached on the node. A load-balanced server is also a very typical intermediate server that is used to receive a request from the client and distribute the request to a plurality of backend servers. A proxy server is also an intermediate server that is responsible for forwarding the request to a real back-end server. As shown, there is different types of intermediate servers in an actual application, which are not enumerated herein.

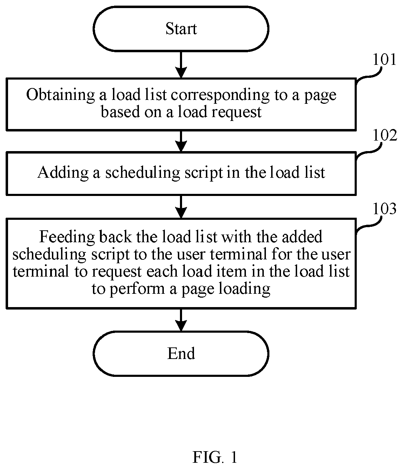

A flowchart of a page loading method is shown in FIG. 1. The specific steps include the following steps.

Step 101: obtaining a load list corresponding to a page based on a load request.

Specifically, in this step, when the load request for a page is received from a user terminal, the load list corresponding to the page is obtained based on the load request. More specifically, the load list may be a html document in an actual application, including a plurality of asynchronous load items. In the present embodiment, a JS (JavaScript) script is used as an example for the asynchronous load item. In an actual application, in addition to the asynchronous load items, there are also HTML (Hypertext Markup Language), CSS (Cascading Style Sheet), IMAGE, etc. in the load list, which are not enumerated herein.

Step 102: adding a scheduling script in the load list.

Specifically, the scheduling script is configured for, after the page has completed loading, simulating a page loading process, and executing the plurality of asynchronous load items; if one asynchronous load item of the plurality of asynchronous load items includes a document write-in function, rewriting a function name of the document write-in function, and writing parameter values of the document write-in function into a preset cache; and after the one asynchronous load item has completed executing, reading out data in the cache, and simulating native behavior of the document write-in function. In the embodiment, the page loading process generally refers to a process of browser rendering. The document write-in function may be a document.write function or a document.writeln function.

More specifically, after the asynchronous load item has completed executing, the process for reading the data in the cache may be implemented by using a callback function. Specifically, when the asynchronous load item is being extracted from an execution queue, the call back function is added to be used for reading out the data in the cache after the asynchronous load item has completed executing.

On the other hand, the preset cache may be created in advance. Specifically, the preset cache may be created every time when the asynchronous load item is being executed.

Step 103: feeding back the load list with the added scheduling script to the user terminal for the user terminal to request each load item in the load list to perform a page loading.

Specifically, after the user terminal receives the load list, the steps, including parsing and execution, can be performed. An operation flow of the browser does not need to be changed. The scheduling script in the load list can complete simulating the page loading process, as well as calling and executing the JS script.

The inventor of the disclosure has found that, after optimizing a webpage loading speed, the blocking of JavaScript to the loading process can be avoided, such that a user can see webpage content as early as possible. However, even though sometimes a user has already seen the page content, the webpage may become a white screen again, or most of the webpage content may disappear. It is obvious that this phenomenon needs to be avoided. After further research, it is found that a HTML (Hypertext Markup Language) expression or JavaScript code may be written into a document (i.e., a load list) by using the document.write function (a document write-in function) in one page. When the document is loaded, the document.write function is called to output content directly to the page. After the document has completed loading, the document.write function is called, and a document.open function (a document open function) is called automatically to open a document flow. At this time, the document flow has been closed. Then, the browser can rewrite all the page content, causing the phenomenon that page content is overwritten, and the white screen or only part of the content is displayed. Therefore, the inventor of the disclosure discoveries that modifying the load list and adding the scheduling script are used to avoid executing the document write-in function after the page has completed loading. Thus, the document.open function does not need to be called, and the page is not redrawn.

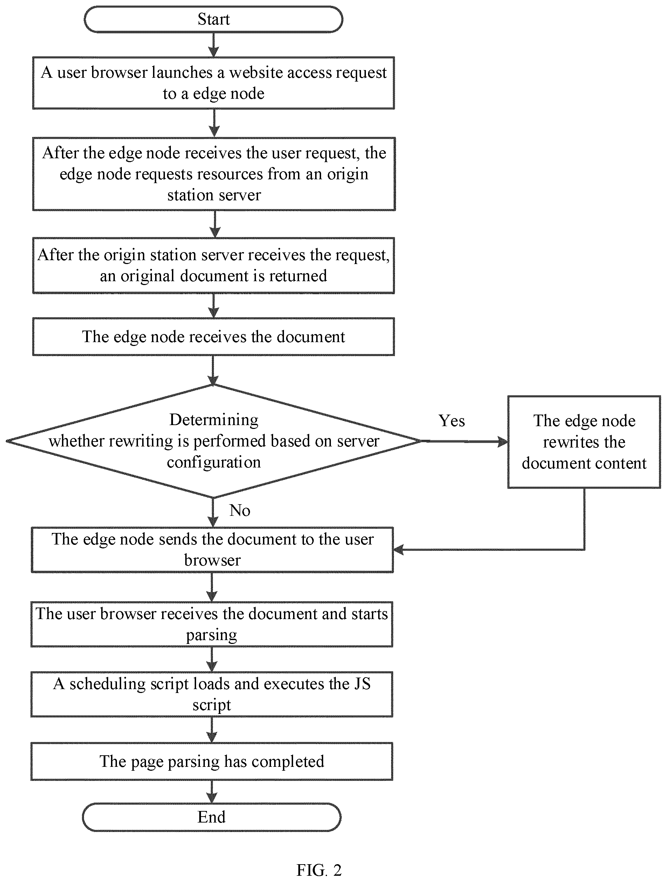

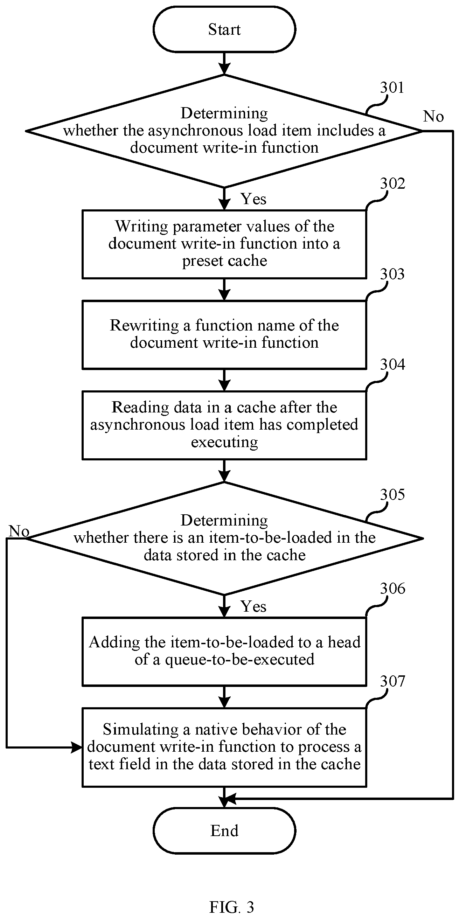

It should be noted that the above-mentioned Steps 101 to 103 relate to main execution steps of the intermediate server. In the embodiment, a system using the intermediate server as an edge node, and the user terminal as a user browser is used as an example to illustrate the overall workflow of a page load system in an actual application. A flowchart is shown in FIG. 2. Specifically, in the beginning, the user browser launches a website access request to the edge node. After the edge node receives the user request, the edge node requests resources from an origin station server. After the origin station server receives the request, the origin station server returns an original html document (i.e., load list) to the edge node. After the edge node receives the html document, based on server configuration, the edge node determinates whether rewriting needs to be performed. That is, the edge node determinates whether an optimization service is used. Specifically, the edge node may make a determination according to a request address in the load request. If the determination is yes, the edge node rewrites the html document content. That is, when the determination is yes, the scheduling script is added in the html document, and then the rewritten html document is sent to the user browser. If the determination is no, the original html document is directly sent to the user browser. After the user browser receives the html document, the html document is parsed. During parsing, the scheduling script loads and executes the JS script until the parsing is completed. As shown, FIG. 3 also shows a complete process for the browser to load page.

As shown, in one embodiment of the present disclosure, by rewriting the function name of the document write-in function, a page redrawn problem formed by calling a document flow open function caused by simultaneously executing the document write-in function while the asynchronous load item is executed can be avoided. In addition, the parameter values of the document write-in function are written into the preset cache. After the asynchronous load item has completed executing, the native behavior of the document write-in function is simulated to ensure that the original document write-in function is executed accurately, which does not affect page displaying effects, and has strong compatibility. As shown, in one embodiment of the present disclosure, the page loading method may improve a page loading speed and avoid re-occurring the white screen after the page has completed loading, having good compatibility. In addition, the embodiment of the present disclosure innovatively improves established website optimization modes, which does not need to change configuration of the user terminal and codes of an origin station, as well as a website framework of the origin station of a page-to-be-accessed, implementing easily. Technological development time of a website owner is reduced, and a better online experience is provided for the terminal user, which is convenient to popularize the embodiment method of the disclosure.

A second embodiment of the present disclosure relates to a webpage loading method. In the embodiment, an execution process for calling a script is clearly illustrated.

Specifically, after the page has completed loading, the asynchronous load items are executed. When the asynchronous load items are executed, the following is further executed. If there is a document write-in function in the asynchronous load item, the function name of the document write-in function is rewritten, and parameter values of the document write-in function are written into a preset cache. After the asynchronous load item has completed executing, data in the cache is read out, and the native behavior of the document write-in function is simulated.

As shown in FIG. 3, a process for executing asynchronous load items by calling a script is illustrated in detail.

Step 301: determining whether a asynchronous load item includes a document write-in function. If yes, Step 302 is performed. If no, the process for calling the asynchronous load item of the script is terminated in the embodiment.

Step 302: writing parameter values of the document write-in function into a preset cache.

Specifically, the preset cache may be created by using variables and be created in advance for later use. More specifically, all parameter content of the document write-in function is fully written into the cache for subsequent parsing, which are not temporarily executed at this time.

Step 303: rewriting a function name of the document write-in function.

Specifically, the function name of the document write-in function may be a document.write function or a document.writeln function. When the function name of the document write-in function is rewritten, the function name may be replaced by a preset character string, so that the document write-in function cannot be identified when the asynchronous load item is executed.

Although an execution sequence of the above Step 302 and Step 303 is limited in the present embodiment, in an actual application, Step 302 and Step 303 may be performed at the same time, or rewriting the function name is performed at first, which are not limited herein.

Step 304: reading data in the cache after the asynchronous load item has completed executing.

Specifically, after the asynchronous load item has completed executing, because the previous document write-in function is not executed, it is ensured that the document write-in function is executed accurately.

In an actual application, after reading, a document tree may also be constructed by using the data in the cache. For example, a DOMParser (document parsing) class is used to transmit the cached data and construct a memory virtual document tree, such as a xml (text mark language) format document tree, such that the subsequent parsing is faster and more convenient.

Step 305: determining whether there is an item-to-be-loaded in the data stored in the cache. If yes, Step 306 is performed; If not, Step 307 is performed.

Specifically, the item-to-be-loaded may be a JS script. An identification tag <script> tag of the JS script can be used to identify whether there is the JS script in the cache.

In an actual application, if the data is constructed to the virtual document tree in advance, when determining whether there is the JS script, the <script> tag may be retrieved in the virtual document tree.

Step 306: adding the item-to-be-loaded to a head of a queue-to-be-executed.

In an actual application, the identified JS script is added to the head of the queue-to-be-executed, that is, the head of the queue containing the asynchronous load item that is currently executing. Thus, after the current asynchronous load item has completed executing, the identified JS script can continue to be executed. If a plurality of JS scripts are identified, the plurality of identified JS scripts are placed to the head of the queue-to-be-executed in order.

Step 307: simulating a native behavior of the document write-in function to process a text field in the data stored in the cache.

After the JS script in the cache has been processed, there may still be a text field. Because the function name of the document write-in function is rewritten, the document write-in function is not executed when the asynchronous load item is executed. In this step, the document write-in function is executed by simulating the native behavior mode. While ensuring that the document write-in function is executed accurately, the document.open function is not called. Identifying the text field may also be parsed and obtained in the virtual document tree constructed in Step 304.

Specifically, the native behavior of the document write-in function is that the text field in the parameter values is written into a certain position of the document. A specific write-in position is determined based on the position where the current asynchronous load item is located. More specifically, if the asynchronous load item is located in a head position of the load list, the text field in the data stored in the cache is written into a first row in a body part of the load list. If the asynchronous load item is not located in the head position of the load list, the text field in the data stored in the cache is written into the position where the asynchronous load item is located.

For example, when an asynchronous load item that is currently executed is a JS script, whether the script position is located in a <head> tag is determined. If the script position is located in the tag, the text content is added to the first row in a <body></body> tag. If the script position is not located in the <head> tag, the text content is written into the current location of the script.

It should be noted that an execution sequence of Step 305 and Step 307 may be changed. Step 307 may be performed to process the text field at first, and then Step 305 is performed to determine whether there is the JS script. When there is the JS script, the JS script is further placed into the queue-to-be-executed.

Further, it should be noted that above Steps 301 to 307 are a process for calling the script to execute one asynchronous load item. After completing the execution process, a next asynchronous load item may continue to be called from the queue-to-be-executed and continue to be executed until all asynchronous load items are completed executing.

As shown, in the embodiment, the execution process for calling the script is clearly illustrated, which is more consistent with the actual situation. In the case of a nested script included in the document write-in function, while the script is executed accurately, the process does not call the document.open function to cause the problem of redrawing the webpage.

A third embodiment of the present disclosure relates to a webpage loading method. The embodiment makes improvements based on the second embodiment, and the main improvements includes: a scheduling script is specifically configured for, after a page has completed loading, simulating the page loading process, and executing the asynchronous load item in the simulated loading process. The asynchronous load item is executed in the simulated loading process, such that the webpage loading method has better compatibility and reduces error probability.

Specifically, when the page loading process is simulated, predeterminable events are registered and triggered to simulate the page loading process by rewriting a document state of the load list. The detailed description is illustrated below.

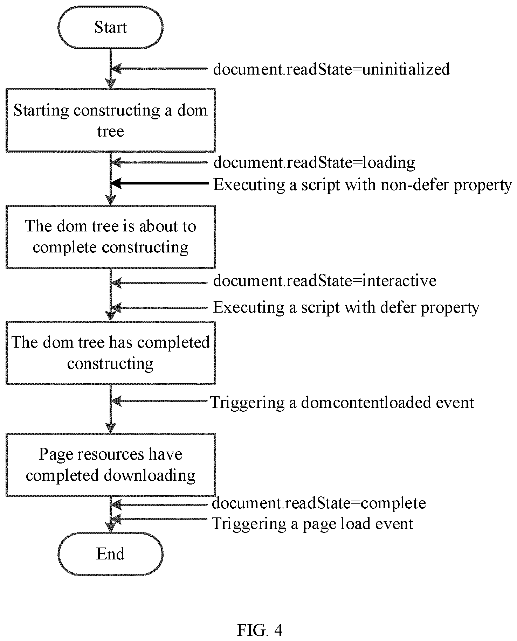

A general rendering process of a browser is shown in FIG. 4. During the entire rendering process, a html document (short for "document" in the following) includes four states in total. That is, specifically, Document. ready State property has four values: uninitialized (Has not started loading), loading (In loading), interactive (Has been loaded, the document starts interacting with the user), complete (Fully loaded). Particular events may also be triggered in particular stages. In one embodiment of the present disclosure, the scheduling script is specifically configured for rewriting the document state of the load list, as well as registering and triggering the predeterminable events, thereby simulating the page loading process.

Further, a dom tree (document tree) needs to be constructed during the webpage loading process. Now, a relationship between the dom tree and the simulated page loading process in one embodiment of the present disclosure is described briefly. After starting loading, at first, the Document. ready State property is set as uninitialized and construction of the dom tree starts. Then, the Document. ready State property is set as loading and a script with non-defer property is executed. Further, when the dom tree is about to complete constructing, the Document.readyState property is set as interactive, and then a script with defer property is executed. Later, after the dom tree has completed constructing, a domcontentloaded event is triggered. In addition, after page resources have completed downloading, the Document.readyState property is set as complete. Next, the page load event is triggered again, thereby terminating the entire page loading process.

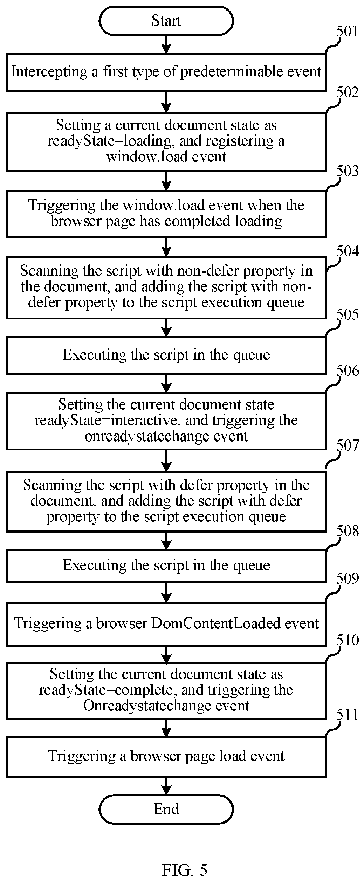

In the embodiment, an execution flowchart of a scheduling script is shown in FIG. 5, including the following steps.

Step 501: intercepting a first type of predeterminable event.

Specifically, the first type of predeterminable event may include one, or any combination, of the following: a document.onreadystatechange (a document state changes) event, a window.onload (a page has completed loading) event, and a document.body.onload (a page has completed loading) event. A monitoring script may possibly exist in the original html document. After listening to the above event, a page-to-be-loaded is re-rendered. Therefore, webpage white screen phenomenon may be further avoided by intercepting the above event, improving compatibility of the scheduling script.

It should be noted that the monitoring script of the above event may not exist in the html document provided by an origin station server in an actual application. Step 501 may not be performed in the scheduling script. That is, Step 501 may be an unnecessary step.

Step 502: setting a current document state as readyState=loading (document status in loading), and registering a window.load (page has completed loading) event.

Specifically, in this step, the state of the html document is rewritten. That is, the original loaded page executes simulation loading, and subsequently, each JS script in the load list is loaded.

Step 503: triggering the window.load event when the browser page has completed loading.

Step 504: scanning the script with non-defer property in the document, and adding the script with the non-defer property to the script execution queue.

Specifically, there are defer property and the non-defer property corresponding to the asynchronous load items, where the defer property is expressed by using defer, and the non-defer property is that a property string does not contain the defer property. Therefore, when scanning, whether the script is a script with the defer property is determined by scanning "defer".

It should also be noted that, the present embodiment may be used in combination with the second embodiment. That is, the property of the asynchronous load item is rewritten in advance. When the property of the asynchronous load item is rewritten, the property of the asynchronous load item is replaced by using a preset character string. Thus, in this step, when scanning, whether it is the asynchronous load item is determined by scanning the preset character string.

For example, a preset character string is "comet". "javascript" is replaced by "comet" in advance to avoid being parsed when the browser loads the page at the first time. The asynchronous load item to be executed is recognized by "comet" in Step 504.

Step 505: executing the script in the queue.

Specifically, according to the time order of adding the scripts to the queue, the scripts in the queue are executed in order.

It should be noted that, in the above Steps 502 to 504, after setting the current document state as readyState=loading, as well as registering and triggering the window.load event, the asynchronous load item with the non-defer property is executed.

Step 506: setting the current document state ready State=interactive (document status shows that the document has been loaded, the document starts interacting with the user), and triggering the onreadystatechange (document state changes) event.

Step 507: scanning the script with the defer property in the document, and adding the script with the defer property to the script execution queue.

Step 508: executing the script in the queue.

Specifically, according to the time order of adding the scripts to the queue, the scripts in the queue are executed in order.

It should also be noted that, in the above-mentioned Steps 506 to 508, after setting the current document state as readyState= Interactive and triggering the onreadystatechange event, the asynchronous load item with the defer property is executed.

It should also be noted that, in the present embodiment, after the asynchronous load items with the non-defer property have completed executing, the asynchronous load items with the defer property are executed, thereby ensuring that different types of asynchronous load items are executed accurately.

Step 509: triggering a browser DomContentLoaded event.

Step 510: setting the current document state as readyState=complete (document state=fully loaded), and triggering the Onreadystatechange event.

Step 511: triggering a browser page load event.

Specifically, page script parsing is terminated until this time. After each asynchronous load item has completed loading, remaining stages of the loading process continues to be simulated to avoid occurring the re-rendering page problem.

It should be noted that the inventor of the present disclosure uses 2 test computers to test respectively the domcontentloaded (a html document has been fully loaded and parsed) time and page load (page resources are loaded successfully) time for non-acceleration scene and acceleration scene at the same time, which involves 159 websites. And a compatible index is counted for the websites using the accelerating scene. Test results are shown as the Tables 1-3.

**Table 1 Average optimization rate of acceleration scene**

| | domcontentloaded | pageload |
|---|---|---|
| Averaged optimization rate | 24.8% | 33.8% |

**Table 2 Acceleration effect of acceleration scene**

| | Optimization rate >0% (the number of websites) | Optimization rate >50% (the number of websites) |
|---|---|---|
| domcontentloaded | 127 | 64 |
| pageload | 127 | 36 |

**Table 3 Compatibility index of acceleration scene**

| The number of verified websites | The number of normal websites (No script error) | Compatibility rate |
|---|---|---|
| 159 | 159 | 100% |

As shown, the average optimization rate of the acceleration scene, the acceleration effect of the acceleration scene, and the compatibility index of the acceleration scene show that the embodiment of the present disclosure has not only good acceleration effect, but also greatly improved the compatibility rate, meeting requirements for a product to go-live.

In the embodiment, the specific simulation process of the scheduling script is clearly illustrated, the asynchronous load items corresponding to the property are executed in a specific process, so that each asynchronous load item may be executed accurately. After first time loading is completed, re-rendering page-to-be-loaded is also avoided as much as possible.

Division of the steps of the foregoing methods is only for ease of description, and during implementation, the steps may be combined into one step or some steps may be split into multiple steps. All shall fall within the protection scope of this application provided that a same logical relationship is included. Insignificant modifications added to or insignificant designs introduced in an algorithm or a procedure without changing the core of the algorithm or the procedure shall fall within the protection scope of this application.

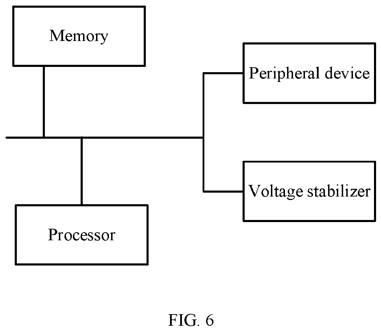

A fourth embodiment of the disclosure is related to an intermediate server. As shown in FIG. 6, the intermediate server includes at least one processor, and at least one memory for communication with at least one processor. The memory stores instructions executable by the at least one processor, and when the instructions are executed by the at least one processor, the at least one processor can implement any page loading method described from the first embodiment to the fourth embodiment.

The memory and the processor may be connected by a bus. The bus may include a number of buses and bridges connected to each other, so as to connect various circuits for one or more processors and one or more memories. In addition, as is known in the art, the bus may be used to connect any other circuits, such as a circuit for a peripheral device, a circuit for a voltage stabilizer and a power management circuit, which is not further described herein. Bus interfaces are provided between the bus and the transceiver. The transceiver may consist of one or more elements, i.e., a plurality of transmitters and a plurality of receivers for communication with any other devices over a transmission medium. Data from the processor is transmitted over a wireless medium through an antenna. Further, the antenna is also configured to receive data and transmit the data to the processor.

The processor may take charge of managing the bus architecture as well as general processing, and may further provide various functions such as timing, peripheral interfacing, voltage adjustment, power source management and any other control functions. The memory may store therein data desired for the operation of the processor.

A fifth embodiment of the disclosure is related to a page loading system. The system specifically includes a user terminal and the intermediate server in the fifth embodiment.

It is easy to find that this embodiment is the system embodiment corresponding to the sixth embodiment, and this embodiment may contain technical solutions of the sixth embodiment. Correlated technical details disclosed in the sixth embodiment are still effective in this embodiment and will not be repeated here in order to reduce duplication.

A sixth embodiment of the disclosure is related to a computer-readable storage medium, storing a computer program. When the computer program is executed by a processor, the computer-readable storage is configured to implement the method in the above embodiments.

That is, persons of ordinary skill in the related art should understand that all or a part of the steps of the method in the embodiments may be implemented by a program instructing relevant hardware. The program is stored in a storage medium and includes several instructions to enable a device (which may be a single-chip microcomputer, a chip, or the like) or a processor to perform all or a part of the steps of the method in the embodiments of this application. The foregoing storage medium includes any medium that can store program code, such as a USB flash drive, a removable hard disk, a read-only memory (ROM), a random-access memory (RAM), a magnetic disk, or an optical disk.

Persons of ordinary skill in the related art may understand that, the above embodiments are specific embodiments for implementation of the present disclosure, and during actual application, various changes may be made to the embodiments in form and detail without departing from the spirit and scope of the present disclosure.

## Claims

1. A page loading method, applied in an intermediate server, comprising:
when a load request for a page is received from a user terminal, obtaining a load list corresponding to the page based on the load request, wherein the load list includes a plurality of asynchronous load items;
adding a scheduling script in the load list, wherein the scheduling script is configured for:
after the page has completed loading, executing the plurality of asynchronous load items;
when one asynchronous load item of the plurality of asynchronous load items includes a document write-in function, rewriting a function name of the document write-in function, and writing parameter values of the document write-in function into a preset cache; and
after the one asynchronous load item has completed executing, reading out data in the cache, and simulating native behavior of the document write-in function; and
feeding back the load list with the added scheduling script to the user terminal for the user terminal to request each load item in the load list to perform a page loading.

2. The page loading method according to claim 1, wherein reading out the data in the cache comprises:
parsing the data in the cache; and
when an item-to-be-loaded is parsed, adding the item-to-be-loaded to a head of a queue-to-be-executed, wherein the queue-to-be-executed is a queue where the plurality of asynchronous load items exist.

3. The page loading method according to claim 2, wherein, before parsing the data in the cache, the method further comprises:
constructing a document tree by using the data in the cache, wherein parsing the data in the cache comprises parsing the document tree.

4. The page loading method according to claim 2, wherein:
the item-to-be-loaded is a JS (JavaScript) script.

5. The page loading method according to claim 1, wherein simulating the native behavior of the document write-in function comprises:
writing a text field in the data in the cache into a position corresponding to a position where the one asynchronous load item is located in the load list.

6. The page loading method according to claim 5, wherein writing the text field in the data in the cache into the position corresponding to the position where the one asynchronous load item is located in the load list comprises:
when the one asynchronous load item is in a head position of the load list, writing the text field in the data in the cache into a first row in a body part of the load list; and
when the one asynchronous load item is not in the head position of the load list, writing the text field in the data in the cache into the position where the one asynchronous load item is located.

7. The page loading method according to claim 1, wherein rewriting the function name of the document write-in function comprises:
rewriting the function name of the document write-in function by using a preset character string.

8. The page loading method according to any of claims 1-7, wherein:
the document write-in function is a document.write function or a document.writeln function.

9. The page loading method according to claim 1, wherein the scheduling script is configured for:
after the page has completed loading, simulating a page loading process, and
executing the asynchronous load item in the simulated page loading process.

10. The page loading method according to claim 9, wherein the scheduling script is configured for:
registering and triggering a predeterminable event to simulate the page loading process by rewriting a document state of the load list.

11. The page loading method according to claim 1, wherein, before adding the scheduling script in the load list, the method further comprises:
determining whether an optimization service is used, and when the determination is yes, performing the step for adding the scheduling script in the load list.

12. The page loading method according to claim 11, wherein:
determining whether the optimization service is used based on a request address in the load request for the page.

13. An intermediate server, comprising:
at least one processor; and
a memory in communication connection with the at least one processor, wherein:
the memory stores instructions executable by the at least one processor, and when the instructions are executed by the at least one processor, the at least one processor implements the page loading method according to any of claims 1 to 12.

14. A page loading system, comprising:
a user terminal; and
the intermediate server according to claim 13.

15. A computer-readable storage medium, storing a computer program, when the computer program is executed by one or more processors, configured to implement the page loading method according to any of claims 1-12.
